# EUROPEAN PATENT SPECIFICATION

(11) **EP 4 054 304 B1**
(45) Date of publication and mention of the grant of the patent: **04.09.2024**
(21) Application number: 20807888.1
(22) Date of filing: 05.11.2020
(51) Int. Cl.: A01M 21/02, A01B 49/02, A01B 63/26, A01B 77/00, A01B 71/08, A01B 39/19

(54) **WEEDING DEVICE**
UNKRAUTVERNICHTUNGSVORRICHTUNG
DISPOSITIF DE DÉSHERBAGE

(30) Priority: 05.11.2019 GB 201916049
(43) Date of publication of application: 14.09.2022
(73) Proprietor: Bennett, Calbert, London Greater London W14 9QX (GB)
(72) Inventor: Bennett, Calbert, London Greater London W14 9QX (GB)
(74) Representative: London IP Ltd
(86) International application number: PCT/IB2020/060409
(87) International publication number: WO 2021/044402

(56) References cited:
- EP-A1- 2 213 150
- CN-A- 110 603 912
- CN-U- 209 376 159
- GB-A- 1 335 268

## Description

### Field of Invention

The pictured embodiment of the invention provides a device for apparatus for providing weeding, in particular using a tractor or similar.

### Background

The process for removing weeds from soil can require multiple tools and can be cumbersome, inefficient and time consuming, especially for large areas of soil such as for example fields. The process can be even more difficult when dealing with compacted soil.

Conventional machinery for removing weeds from soil often involves removing a top layer prior to subsequent processing of this layer of soil. This can however be labour intensive and can cause increased wear to machinery.

There is therefore a need for an efficient, easy-to-use weeding device which can be used to weed an area of land in a single pass.

Another aim is to provide a device which removes weeds without chemicals or pesticides.

### Prior Art

US2015/305223 (Dynamic Ditchers Inc) discloses a soil spreading scraper device comprising: a frame supported for movement along the ground in a forward working direction; an impeller member supported on the frame for rotation about an impeller axis within a plane of rotation lying generally perpendicularly to the impeller axis. The plane of rotation extends generally upward and rearward at an angle between 45 degrees and 75 degrees from horizontal; a cutting blade supported on the frame forwardly and downwardly relative the impeller member and arranged to cut a top layer of soil from the ground as the frame is displaced in the forward working direction.

A kicker is supported on the frame for rotation about a kicker axis spanning above the cutting blade transversely to the forward working direction and is arranged to propel soil generally rearward onto the impeller member. The impeller member comprises a plurality of impeller blades arranged to spread soil deposited on the impeller member generally radially outward from the impeller axis as the impeller member is rotated. The cutting blade projects downwardly and forwardly to a forward cutting edge at an angle from the horizontal which is less than the plane of rotation of the impeller member; and the forward cutting edge being positioned rearwardly of the kicker axis.

Chinese utility model CN-U-210632633 (University of Sichuan Agricultural) discloses an ecological restoration device for heavy metal contaminated soil of a bamboo forest. The machine comprises a walking device and a soil turning device. The soil turning device comprises a soil crushing mechanism which comprises a front bracket and a soil crushing roller. The soil breaking device and crushing device enables soil, with developed root systems in a bamboo forest, to be easily broken and crushed using the device.

German Gebrauchsmuster DE-U-298 07 777 (ASPERG Gartnereibedarf) discloses a mechanical weed control device for the mechanical removal of weeds from cultivated plants which are arranged in beds. The device has elements attached to a chassis which act on the ground and rotate about an axis wherein the chassis there is a coulter which lifts the ground and sprung tines are arranged on the axle which act on the raised soil and break it up. IN the path of opened up soil there is an impact curtain on which the plants are separated from adhering soil parts.

UK patent GB 1 335 268 (Hollins) discloses a sowing machine which comprises discs for breaking up a surface layer of soil as the machine is pulled forwards. Soil is transferred by digger blade to a drum which has a canopy and closed sides. Inside the drum, cutting elements are rotated to break up the soil further. These cutting elements are mounted on shaft which is driven at one end by a chain from a drive shaft driven, via gearbox of a tractor.

EP2213150 discloses an apparatus for extracting vegetation from soil.

CN209376159U discloses a soil turning and throwing device.

Conveyors and rollers may be positioned behind and above digger blades so as to assist in the raising of soil to the drum.

### Summary of Invention

According to a first aspect of the present invention, there is provided weeding device as defined in appended claim 1.

The invention therefore is able to remove weeds without pesticide or chemicals by exposing the roots and root system to sunshine and thereby irradicate weed sin an 'environmentally friendly' manner.

In one embodiment, the frame has substantially vertical, triangular sidewalls rising orthogonally from a substantially horizontal hoe blade . The horizontal blade does not dig into the ground. It acts as platform on which vegetation and debris are directed.

A toolbar may be provided along a front edge or face. The toolbar optionally has cutting edges or feet that cut into the soil. The cutting edges or feet ideally have a curved profile similar to a Cornish shovel or shark's head. The cutting edges or feet are curved along either side and taper to a sharp point so as to break up soil and thereby enable vegetation to be loosened. The rotating action of the reels then acts to lift the loosened vegetation onto the platform.

The toolbar or cultivator is attached to a three point linkage and is lowered and raised by the three point linkage. In one embodiment the cultivator or toolbar has no suspension. The cultivator however has feet which cut into the ground. As mentioned above the feet are shaped similar to Cornish shovels or sharks' heads.

The device which is attached to the cultivator has a wheel on either side to pro-vide support and the wheels have suspension. Importantly the front edge of the platform is bevelled, for example to resemble an edge of a chisel. And also an advantage of this is that the rear of the platform is curved so that the vegetation is directed upwards instead of immediately off the back of the platform. As soil is denser than vegetation and weeds, it tends to settle to the ground before the weeds and vegetation which remain exposed to the sunlight and elements. An adjustment means is preferably provided to raise and lower the device. In some embodiments the adjustment means includes a winding means which may be operated by hand using a winder. Optionally an adjuster is located on either side of device sop that each wheel can be raised and lowered independently of the other wheel.

In one embodiment, one of the sidewalls contains a chain to drive the axle.

In one embodiment, the frame supports a housing that contains connective gearing to drive the chain to drive the axle.

In one embodiment, the hoe blade extends substantially parallel to the axle.

The adjustment mechanism may for example be a threaded adjustment mechanism.

In one embodiment, the position of the hoe blade may be adjustable relative to the frame and/or platform to accommodate the vegetation and earth upon which the device is being used.

In one embodiment, the hoe blade is a rectangular, substantially planar plate which has runners running from a front edge of the hoe to a back edge of the hoe so as to provide guide channels for dislodged vegetation and earth.

According to a second aspect of the present invention, there is provided a weeding device as defined in appended claim 3.

In one embodiment, the or each row comprising a plurality of spaced apart plough members,
In one embodiment, one or more, preferably each, plough member comprises a substantially planar plate for engaging with the layer of vegetation/earth. In one embodiment, the planar plate is substantially rectangular or triangular in shape, preferably triangular in shape. In one embodiment, the or each plough member provides one or more grooves, channels or runners extending between a front and rear end thereof (relative to the forward direction) to provide guide channels for dislodged vegetation and earth from the layer of vegetation or earth. In one embodiment, the or each row of plough members is aligned to extend in a first direction. The first direction preferably extends at an angle to the for-ward direction of the frame. Preferably, the first direction extends substantially perpendicular to the forward direction of the frame.

The, or each, row of plough members preferably comprises at least 2, preferably at least three, for example four or more plough members.

The plough members in a first row may be aligned (in the forward direction) with the plough members in a second adjacent row (or subsequent rows).

The plough members in a first row may be offset (in the forward direction) from the plough members in a second adjacent row (or subsequent rows).

The plough members in one row may be aligned (in the forward direction) with the plough members in alternate rows and offset (in the forward direction) from the plough members in adjacent rows.

Ideally a plurality of sprung support means, or bogies are provided in order to facilitate movement of the weeding device across uneven ground. The bogies may include suspension means, such as: leaf springs or sprung members or helical springs or dampers, such as hydraulic dampers, or any combination of the aforementioned devices in order to absorb shocks and facilitate travel across uneven ground.

Furthermore the frame may comprise two or more parts which are interconnected and articulated in order to facilitate travel across sloping or uneven ground.

The frame may comprise a plurality of pairs of wheel members. Preferably, each wheel member of the or each pair of wheel members are located on op-posing sides of the frame.

Preferably, the first axle defines a longitudinal axis extending substantially perpendicular to the forward direction of the frame.

The first paddles are preferably located in front of (relative to the forward direction) the platform. The first paddles are preferably located to the rear of (relative to the forward direction) the plough members.

Preferably, the first paddles are uniformly spaced apart from each other along the first axle.

In one embodiment, the plurality of first paddles are provided in an arrangement comprising at least one set of first paddles. Preferably, the plurality of first paddles comprises a plurality of sets of first paddles, in which the sets of first paddles are spaced apart from each other along the first axle.

Preferably, the plurality of first paddles comprises at least two sets of first paddles, preferably at least five sets of first paddles, preferably at least ten sets of first paddles, preferably at least twelve sets of first paddles, for example thirteen sets of first paddles.

Preferably, the plurality of sets of first paddles are uniformly spaced apart from each other along the first axle.

Preferably, each paddle within each set of first paddle extends within a plane defined by the set of first paddles.

Preferably, the plane(s) defined by the or each set of first paddles extends substantially perpendicular to the longitudinal axis of the first axle.

Each set of first paddles preferably comprises at least two, preferably at least five, preferably at least ten, preferably at least fifteen, for example sixteen paddles. Preferably, the plurality of first paddles within each set of first paddles are uniformly spaced apart from each other about the first axle.

Preferably, the location of the first axle relative to the frame as measured in a vertical direction may be adjustable to accommodate the vegetation and earth upon which the device is being used, i.e. to enable the first paddles to contact the displaced earth/vegetation.

Preferably, the second axle defines a longitudinal axis extending substantially perpendicular to the forward direction of the frame. Preferably the first and second axles extend substantially parallel to each other.

The second paddles are preferably located above and vertically displaced from the platform. The second paddles are preferably located to the rear of the first axle and plough members.

Preferably, the second paddles are uniformly spaced apart from each other along the second axle.

In one embodiment, the plurality of second paddles are provided in an arrangement comprising at least one set of second paddles. Preferably, the plurality of second paddles comprises a plurality of sets of second paddles, in which the sets of second paddles are spaced apart from each other along the second axle.

Preferably, the plurality of second paddles comprises at least two sets of second paddles, preferably at least five sets of second paddles, preferably at least ten sets of second paddles, preferably at least twelve sets of second paddles, for example thirteen sets of second paddles.

Preferably, the plurality of sets of second paddles are uniformly spaced apart from each other along the second axle.

Preferably, each paddle within each set of second paddle extends within a plane defined by the set of second paddles.

Preferably, the plane(s) defined by the or each set of second paddles extends substantially perpendicular to the longitudinal axis of the second axle. Each set of second paddles preferably comprises at least two, preferably at least five, preferably at least ten, preferably at least fifteen, for example sixteen paddles.

Preferably, the plurality of second paddles within each set of second paddles are uniformly spaced apart from each other about the second axle.

Preferably, the location of the second axle relative to the frame as measured in a vertical direction may be adjustable to accommodate the vegetation and earth received on the platform, i.e. to enable the second paddles to contact the dis-placed earth/vegetation.

The frame may comprise a housing having opposed side portions extending be-tween a front end and an opposed rear end of the device. The side portions may provide at least one pair of aligned slots (i.e. aligned in a direction extending substantially perpendicular to the forward direction of the device), each slot being configured to receive opposed ends of a first or second axle. Each slot preferably extends in a direction extending substantially perpendicular to the layer of vegetation/earth and/or to the plane defined by the platform.

The housing may further comprise an adjustment mechanism in communication with each slot configured to enable the location of the corresponding first and/or second axle to be independently adjusted within the corresponding slots in order to enable the location of the first and/or second paddles to be independently adjusted to correspond to the conditions of the vegetation/earth.

The adjustment mechanism may for example be a threaded adjustment mechanism.

The platform preferably extends underneath (i.e. between the vegetation and/or earth and the second paddles) and to the rear of (relative to the forward direction) the second paddles.

The platform preferably comprises a forward platform section (located adjacent the first paddles and underneath the second paddles) and a rearward platform section located to the rear of the second paddles. The platform comprises a first end located adjacent the first paddles and an opposed rear end defined by the rearward platform. Preferably, the forward platform section is configured to receive lifted, displaced vegetation and/or earth from the first paddles, and the rearward platform section is configured to receive weeded soil from the second paddles.

The term "weeded soil" is used herein to refer to soil which has been separated from vegetation or weeds.

In one embodiment, the second paddles are aligned with (and vertically dis-placed from) the forward platform section of the platform.

In one embodiment, the forward platform section extends substantially parallel to the plane defined by the layer of vegetation and/or earth.

In one embodiment, the rearward platform section extends upwardly away from the plane defined by the forward platform section. In one embodiment, the rearward platform section is curved in shape.

The rearward platform section is preferably shaped and dimensioned, for example curved, so as to receive the weeded soil from the second paddles whilst enabling the separated weeds or vegetation to be propelled over the rear end of the rearward platform.

In one embodiment, the drive mechanism comprises at least one drive chain operable to rotate the first and second axles.

In one embodiment, the drive mechanism is configured to independently rotate the first and second axles. As such, the operator may adjust rotation, for ex-ample rotation speed, of the first and/or second axles depending on the circum-stances.

In one embodiment, the frame further comprises a housing that contains the drive mechanism, for example connective gearing configured in use to drive one or more drive chains configured to drive the first and/or second axles.

In one embodiment, the weeding device comprises one or more attachment features for attachment, preferably releasable attachment, to a motorised vehicle. Preferably the motorised vehicle may be farm machinery, such as a tractor. The weeding device may for example be mounted on a tool bar or a cultivator of farm machinery such as for example a tractor. The weeding device of the present invention may be attached to a tractor's hydraulic linkage and top link and the power transfer shaft so as to provide powered adjustment and/or rotation as required.

In use the weeding device of the present invention is secured to a tractor and driven across the surface of vegetation/earth. Rotation of the wheel members carries the frame in a forward direction. As the frame passes over the vegetation/earth, the plough members dislodge the earth/vegetation, the rotating first paddles then lift the dislodged earth/vegetation onto the platform which is con-figured to not contact the layer of earth/vegetation beneath the device. Once received onto the platform the second paddles dislodge the vegetation and re-move the vegetation from the soil to provide weeded soil.

The device of the present invention provides a weeding device for efficient and continuous removal of vegetation and weeds from soil whilst the tractor makes a single pass across the layer of earth.

### Brief Description of Figures

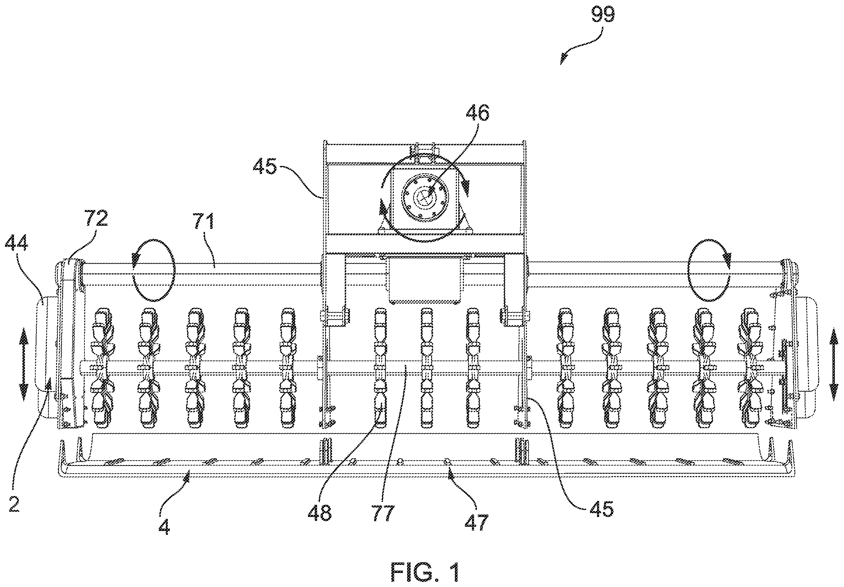

Figure 1 shows a view from rear of an embodiment of the device according to the present invention;

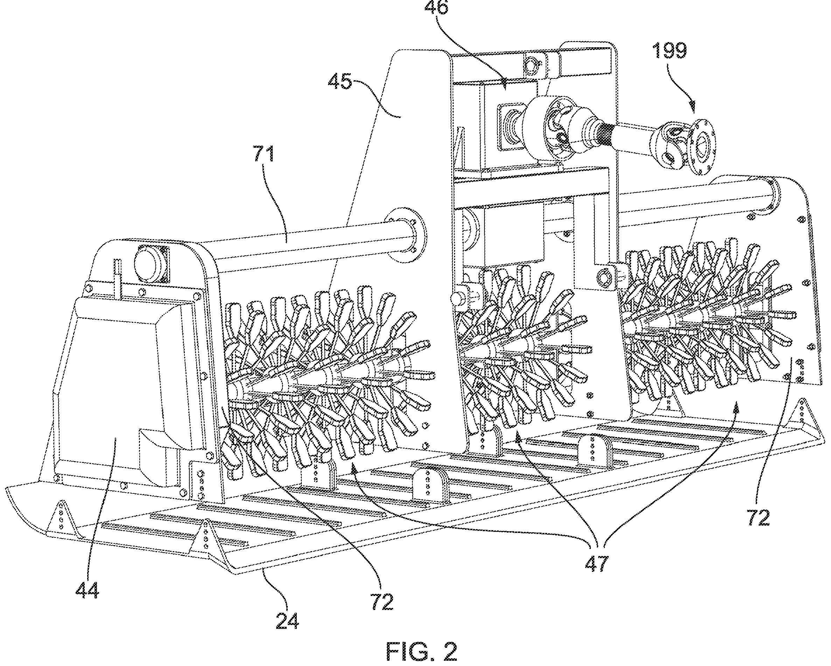

Figure 2 shows an isometric view from in front of the embodiment shown in Figure 1;

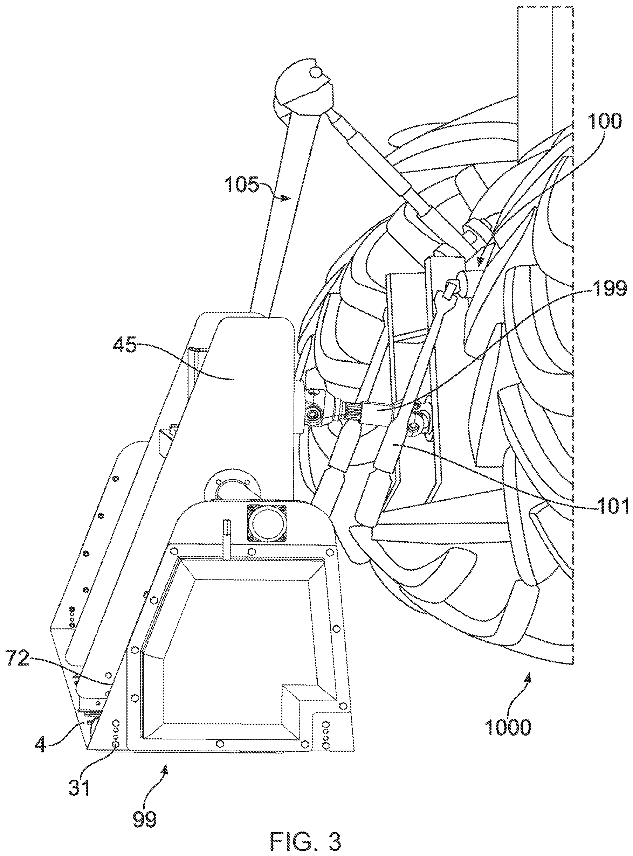

Figure 3 shows a side view of the embodiment shown in Figure 1 in use on apparatus comprising a tractor;

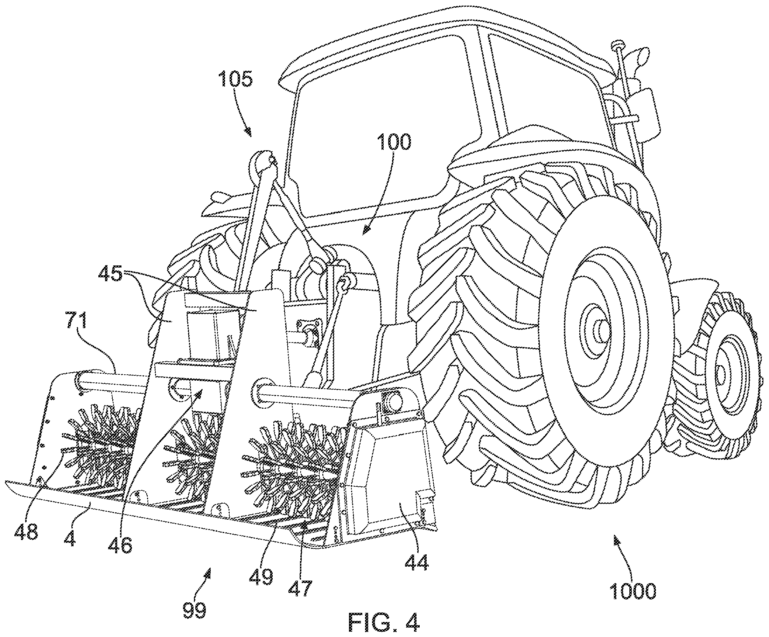

Figure 4 shows an isometric view from the rear of the embodiment of the apparatus shown in Figure 3;
Figure 5 shows three side views of the embodiment shown in Figure 1;

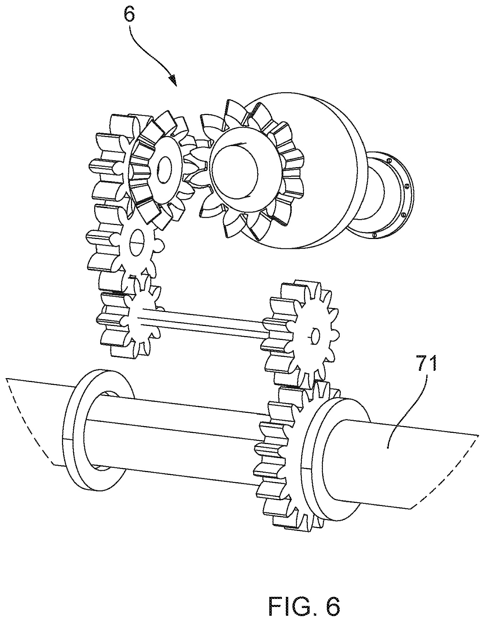

Figure 6 shows a diagrammatic isometric view of gearing for the embodiment shown in Figure 1;

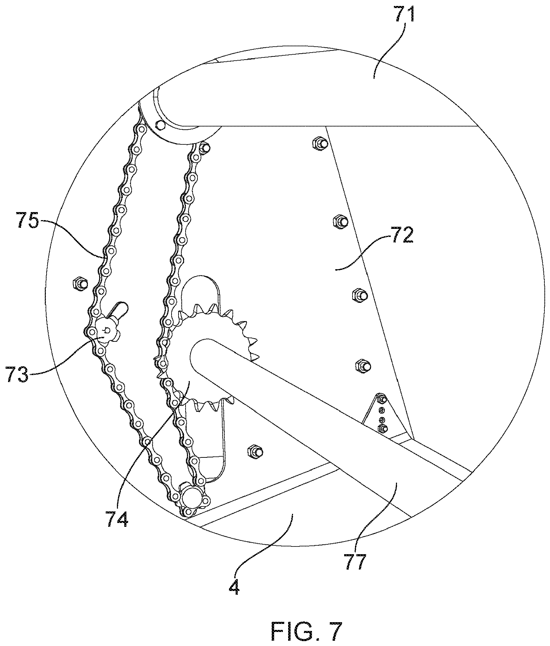

Figure 7 shows a detail isometric view of the drive chain for the embodiment shown in Figure 1;
Figure 8 shows a rear view from above of the weeding device according to one embodiment of the present invention;
Figure 9 shows a front view from above of the weeding device of Figure 8;
Figure 10 shows a side view of the weeding device of Figure 8;
Figure 11 shows an enlarged view of the height adjustment features of the weeding device of Figure 8; and
Figure 12 shows a view of the weeding device of Figure 8 attached to a tractor.

### Detailed Description of the Embodiment

With reference to the figures there is shown an embodiment of the weeding device for providing weeding generally comprising a device 99 to be attached to a tractor 1000, said device 99 comprising a frame 2, a hoe blade 4 and one or more rotating portions 48; wherein the hoe blade 4 is arranged to cut at a first height, and the rotating portions 48 are arranged to rotate at a second height above the first height.

The device is envisaged to be attached to the tractor's hydraulic linkage 101 and top link 105 and the power transfer shaft 199 so as to provide powered adjustment and/or rotation.

The first height is below the tractor in use such that the hoe blade 4 may be arranged to cut into the surface of the ground.

The hoe blade 4 may be substantially horizontal, or for example having a depending front edge 24 in use.

In this way the hoe blade may be arranged in use to skim the ground, or cut a top surface thereof, and thereby displace topsoil, and vegetation or weeds. With reference to the pictured embodiment the device 99 is envisaged to be pulled behind a tractor 1000 in use, and comprises a frame providing substantially vertical substantially triangular sidewalls rising orthogonally from a substantially horizontal hoe blade 4, arranged to cut into the ground as the hoe moves forward, with a thin, depending and/or sharp front edge. The frame is attached in use to a tractor's three-point linkage hitch.

The device connects directly to the tractor's standard three-point linkage hitch 100 thereby allowing the device to be raised and lowered by the tractor.

The frame 2 provides an axle 77 parallel the hoe, having two vertical sides 72 supporting the axle. The axle comprises a plurality of rotating portions 48, which portions rotate and catch or hit the dislodged vegetation or weeds after dislodging by the hoe at the lower height. The dislodged vegetation is thereby hit by the portions and thrown behind the device.

These portions 48 are provided on three rotating paddles 47, each having a plurality of rotating portions 48 thereon. These paddles 47 are provided in three sections of the frame, which frame comprises the two sides 72, and two intermediate walls 45 defining a middle section. The middle section's walls 45 extend above the axle to support a housing 46 providing a supporting connector 199 for a tractor hitch 100.

The housing 46 further houses connective gearing in a gearbox 6 connecting the tractor hitch to a drive shaft 71. The drive shaft 71 is parallel the axle wherein one of the sides 72 contains a chain 75 to drive 71 the axle and the connective gearing 6 is contained within the housing 46.

The apparatus in this way aims to reduce a farmer's or user's dependence on harmful chemicals and is especially suitable for organic farming. The apparatus provides agricultural machinery designed to remove weeds from fields without spraying chemicals, ripping the weeds out and leaving them on the surface to decompose in the sun.

The transmission system comprises a constant tension chain drive which powers the paddle axle from the gearbox 6 and which connects to the (power take-off) PTO shaft on the tractor. A chain 75 transfers power from the driveshaft 71 to the axle 77 and paddles 47, for example spinning them at 1000RPM. The central gearbox 6 transfers the power from the PTO shaft to the main driveshaft 71 using a bevel gear and idler gears. A gear 74 on the axle 77 is arranged to interact with the chain 75 and allow the axle to move up and down in a slot in the sides 72. A swing arm 73 and gear keep the chain 75 in constant tension.

The paddles 47 can be adjusted in height by rotating a hex fitting which in turn spins a lead screw which raises a bearing block providing support for the axle.

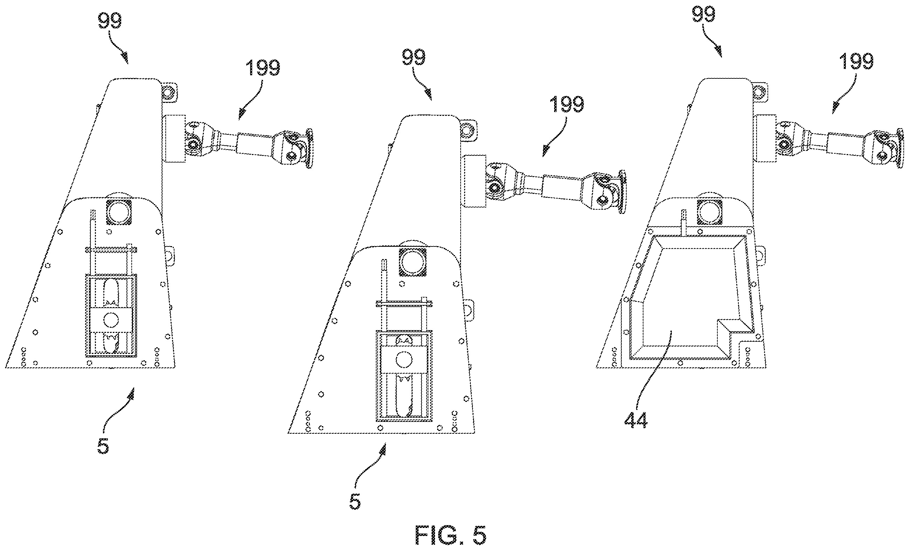

As shown in Figures 5 a side 72 of the frame contains the height adjustment system 5 for the paddles.

In order to raise the height of the axle and rotating paddle portions 47 therefore the user will:
Remove a protective panel 44 from the side, rotate two lead screws with a socket wrench such that the block supporting the axle moves on the threads on the lead screws.

Once the desired height is reached, the protective panel 44 can be replaced.

The pictured embodiment further comprises an adjustable height hoe 4 so as to allow for local conditions.

The height of the hoe blade can be adjusted by moving adjustment means, such as bolts 31, to a higher or lower position to allow the base of the weeds to be targeted by the hoe blade 4.

The hoe blade 4 is a rectangular substantially planar plate which comprises runners 49 running from a front edge to a back edge so as to provide guide channels for dislodged vegetation.

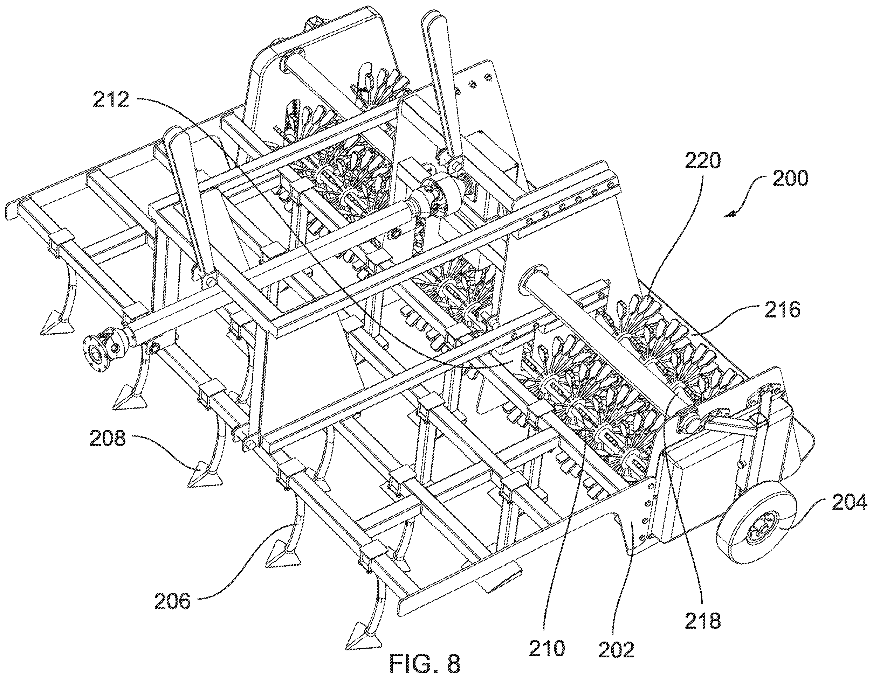

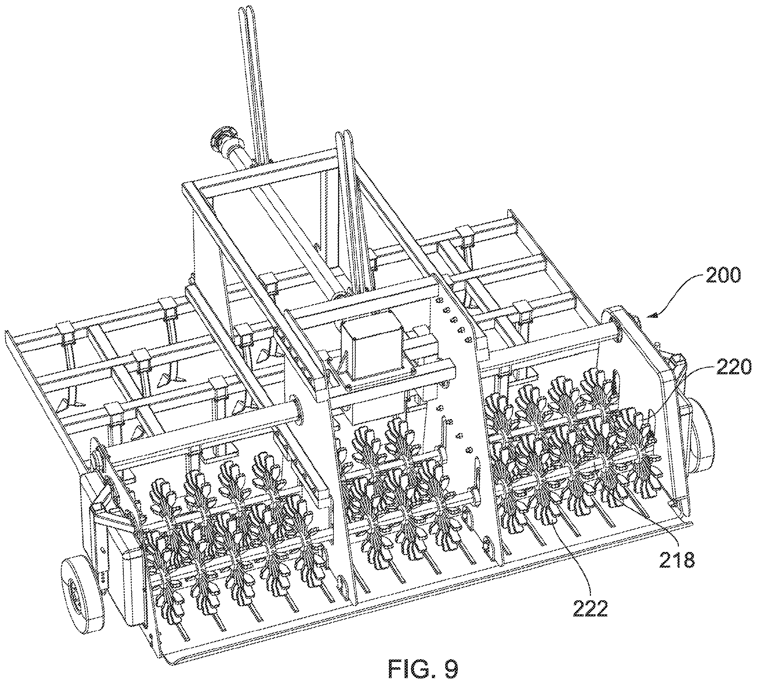

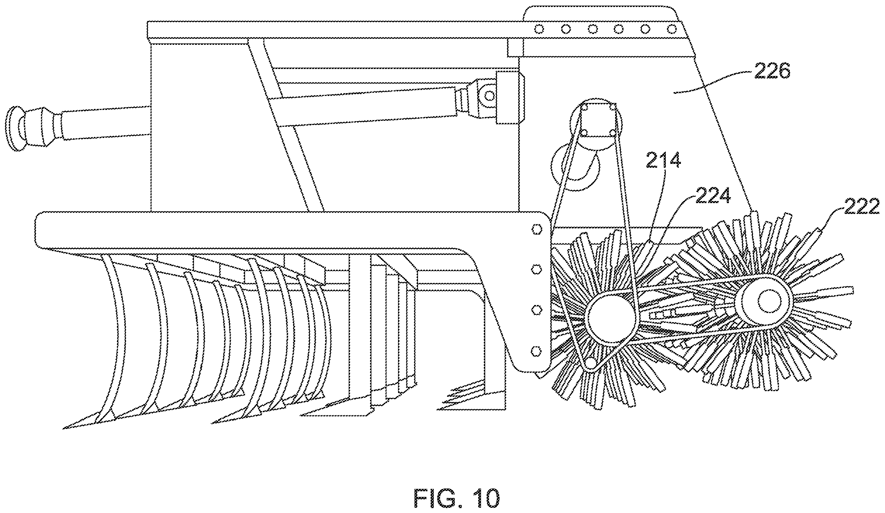

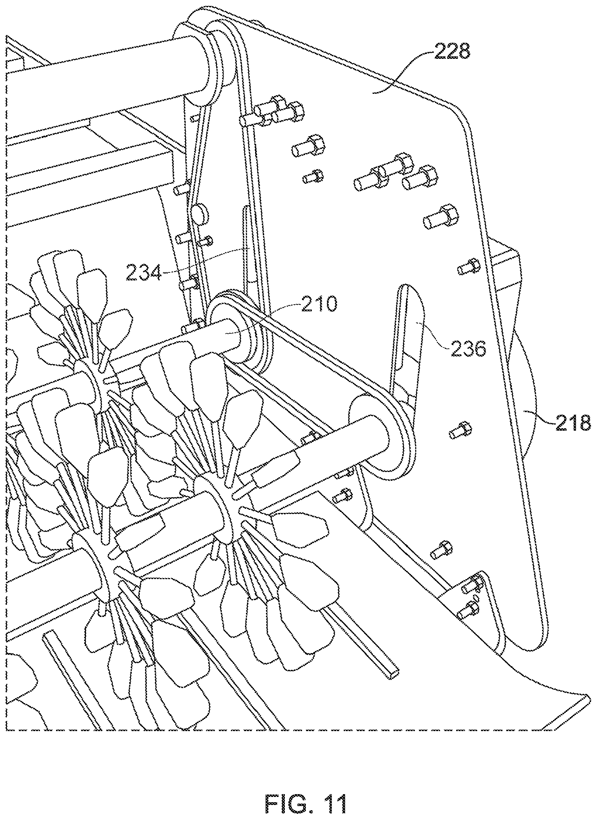

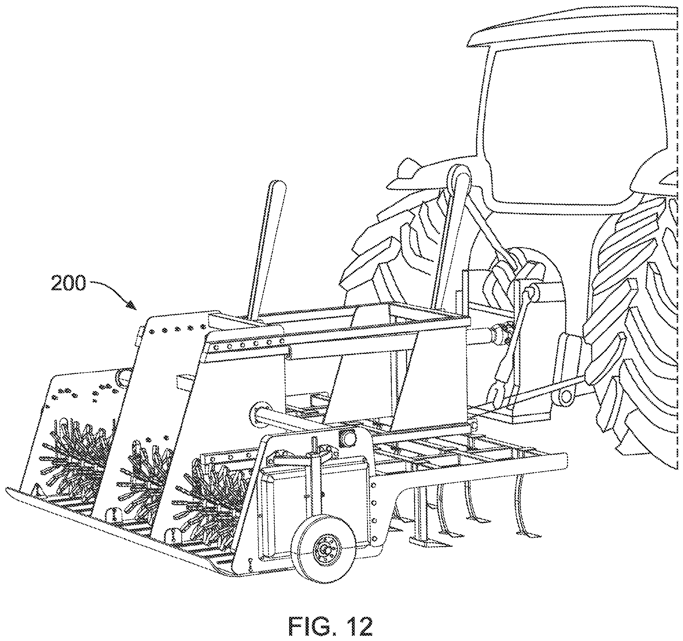

With reference to Figures 8 to 12, the weeding device 200 comprises a frame 202 comprising a pair of wheel members 204 for contacting a layer of vegetation or earth. The pair of wheel members 204 are rotatable to move the frame 202 in at least a forward direction. The frame 202 supports four spaced apart rows of plough members 206. It is to be understood that the frame may comprise any suitable number of rows of plough members, such as for example a single row of plough members, two rows, or more than four rows of plough members. The distal free end 208 of each plough member 206 is configured in use to be engageable with a layer of vegetation or earth to produce displaced vegetation and/or earth. In the illustrated embodiment, the distal free end 208 is substantially triangular in shape with guide channels for the disrupted vegetation/earth. It is however to be understood that the distal free end may have any suitable shape, with or without guide channels, and is not to be limited to this configuration.

The device 200 further comprises a first axle 210 supported by the frame 202. The first axle 210 defines a longitudinal axis extending substantially perpendicular to the forward direction of the frame 210. The first axle 210 is rotatable about the longitudinal axis thereof relative to the frame 202. The first axle 210 comprises thirteen sets of first paddles 212 uniformly spaced apart from each other along the length of the first axle 210. Each set comprises a plurality of first paddles 212 extending radially outwardly from the first axle 210. The distal end 214 of each first paddle 212 is arranged such that upon rotation of the first axle 210 the distal end 214 of each paddle 212 is configured to sequentially engage with and lift the displaced vegetation and/or earth produced by the plough members 206.

The device 200 further comprises a platform 216 located downstream from the plough members 206b and the first axle 210. The platform 216 is spaced apart from and free from contact with the layer of vegetation or earth. The platform 216 is configured in use to receive the lifted, displaced vegetation and/or earth from the first paddles 212.

The device 200 further comprises a second axle 218 supported by and rotatable relative to the frame 202 and positioned adjacent and vertically displaced from the platform 216. The second axle 218 defines a longitudinal axis extending substantially perpendicular to the forward direction of the frame 202. The second axle 218 is rotatable about the longitudinal axis thereof relative to the frame 202. The second axle 218 comprises thirteen spaced apart sets of second paddles 220 extending radially outwardly therefrom. The distal end 222 of each second paddles 220 is arranged such that upon rotation of the second axle 218 the distal end of each second paddle 220 is configured to sequentially engage with the lifted, displaced vegetation and/or earth located on the platform to separate weeds therefrom.

The device 200 further comprises a drive mechanism 224 configured in use to rotate the first 210 and second 218 axles relative to the frame 202.

The frame 202 further comprises a housing 226 having opposed side portions 228 extending between a front end and an opposed rear end of the device 200. The side portions 228 provide a first pair of aligned slots 234 and a second pair of aligned slots 236 extending substantially perpendicular to the layer of vegetation/earth and/or to the plane defined by the platform. Each slot 234, 236 is configured to receive opposed ends of the first 210 or second 218 axle. The housing 226 furthers comprises a threaded adjustment mechanism in communication with each slot 234, 236 configured to enable the location of the corresponding first and/or second axle 210, 218 to be independently adjusted within the corresponding slots in order to enable the location of the first and/or second paddles to be independently adjusted to correspond to the conditions of the vegetation/earth.

In use, the device 200 is coupled directly to the tractor's standard three-point linkage hitch thereby allowing the device to be raised and lowered by the tractor.

The tractor drives forward causing the wheels 204 of the device 200 to rotate and drive the frame 202 in a forwards direction. The distal ends 208 of the plough members 206 cut into and dislodge the earth/vegetation. As the frame 202 drives forward, the rotating first 212 contact the dislodged earth/vegetation and lift this vegetation onto the platform 216 of the device 200. The second paddles 220 rotate, engage with the lifted, deposited vegetation/earth on the platform 216 and separate the vegetation from the earth to provide weeded soil.

The invention has been described by way of examples only and it will be appreciated that variation may be made to the above-mentioned embodiments without departing from the scope of invention.

With respect to the above description then, it is to be realised that the optimum dimensional relationships for the parts of the invention, to include variations in size, materials, shape, form, function and manner of operation, assembly and use, are deemed readily apparent and obvious to one skilled in the art.

Therefore, the foregoing is considered as illustrative only of the principles of the invention.

## Claims

1. A weeding device (99) comprising: a frame (2) comprising at least a pair of wheel members for contacting a layer of vegetation or earth, in which the pair of wheel members are rotatable to move the frame in at least a forward direction, in which the frame supports: a platform comprising a front end and an opposed rear end, in which at least one hoe blade (4) is provided at the front end thereof and arranged in use to engage with, and displace, a layer of vegetation and/or earth onto the platform; an axle (77) supported by the frame above the platform, in which the axle defines a longitudinal axis extending at an angle to the forward direction of the frame, and in which the axle is rotatable about the longitudinal axis thereof relative to the frame, in which a first axle comprises a plurality of paddles (47) extending radially outwardly therefrom, the distal end of each paddle is arranged such that upon rotation of the first axle the distal end of each paddle is configured to sequentially engage with, scoop and lift the displaced vegetation and/or earth received on the platform; and a drive mechanism (71, 75) is configured in use to rotate the first axle relative to the frame, wherein a spacing separating the first axle and the platform is adjustable; **characterized in that**:
the frame comprises: a housing having opposed side portions (72) extending between a front end and an opposed rear end of the device or platform, and in which the side portions provide a pair of aligned slots, each slot being configured to receive opposed ends of the axle and extending in a direction extending substantially perpendicular to the layer of vegetation/earth and/or to the plane defined by the platform, and in which the housing further comprises an adjustment mechanism (5) in communication with one or each slot configured to enable the location of the axle to be adjusted within the corresponding slots in order to enable the location of the paddles to be adjusted to correspond to the conditions of the vegetation/earth.

2. A weeding device as claimed in claim 1 in which the position of the hoe blade is adjustable relative to the frame and/or platform to accommodate the vegetation and earth upon which the device is being used.

3. A weeding device (200) comprising: a frame (202)comprising at least a pair of wheel members (204) for contacting a layer of vegetation or earth, in which the pair of wheel members are rotatable to move the frame in at least a forward direction, in which the frame supports: at least one row of plough members (206), in which the distal free end (208) of each plough member is configured in use to be engageable with a layer of vegetation or earth to produce displaced vegetation and/or earth; a first axle (210) supported by the frame, in which the first axle defines a longitudinal axis extending at an angle to the forward direction of the frame, and in which the first axle is rotatable about the longitudinal axis thereof relative to the frame, in which the first axle comprises a plurality of first paddles (212) extending radially outwardly therefrom, in which the distal end of each first paddle is arranged such that upon rotation of the first axle the distal end of each paddle is configured to sequentially engage with and lift the displaced vegetation and/or earth produced by the at least one row of plough members; a platform (216) located downstream from the at least one row of plough members and the first axle, in which the platform is spaced apart from and free from contact with the layer of vegetation or earth, and in which the platform is configured in use to receive the lifted, displaced vegetation and/or earth from the first paddles; a second axle (218) supported by and rotatable relative to the frame and positioned adjacent and vertically displaced from the platform, in which the second axle defines a longitudinal axis extending at an angle to the forward direction of the frame, and in which the second axle is rotatable about the longitudinal axis thereof relative to the frame, in which the second axle comprises a plurality of second paddles (220) extending radially outwardly therefrom, in which the distal end (222) of each second paddles is arranged such that upon rotation of the second axle the distal end of each second paddle is configured to sequentially engage with the lifted, displaced vegetation and/or earth located on the platform to separate weeds therefrom; and a drive mechanism (224) configured in use to rotate the first and second axles relative to the frame; the location of the first and/or second axle is adjustable in a vertical direction relative to the frame; and **characterized in that**
the frame further comprises a housing (226) having opposed side portions (228) extending between a front end and an opposed rear end of the device, in which the side portions provide at least one pair of aligned slots (234, 236) extending substantially perpendicular to the layer of vegetation/earth and/or to the plane defined by the platform, each slot being configured to receive opposed ends of a first or second axle, and in which the housing further comprises an adjustment mechanism in communication with each slot configured to enable the location of the corresponding first and/or second axle to be independently adjusted within the corresponding slots in order to enable the location of the first and/or second paddles to be independently adjusted to correspond to the conditions of the vegetation/earth.

4. A weeding device as claimed in claim 3, in which each plough member comprises a substantially planar plate for engaging with the layer of vegetation/earth, and in which each plough member provides one or more grooves, channels or runners extending between a front and rear end thereof to provide guide channels for dislodged vegetation and earth from the layer of vegetation or earth.

5. A weeding device as claimed in either of claims 3 or 4, in which the location of the plough members may be adjusted relative to the frame.

6. A weeding device as claimed in any one of claims 3 to 5, in which the first axle defines a longitudinal axis extending substantially perpendicular to the forward direction of the frame.

7. A weeding device as claimed in any one of claims 5 to 6, in which the first paddles are located to the rear of the at least one row of plough members.

8. A weeding device as claimed in any one of claims 3 to 7, in which the plurality of first paddles are provided in an arrangement comprising a plurality of sets of first paddles spaced apart from each other along the first axle.

9. A weeding device as claimed in any one of claims 3 to 8, in which the second paddles are located above and vertically displaced from the platform.

10. A weeding device as claimed in any one of claims 3 to 9, in which the second paddles are located to the rear of the first axle and the at least one row of plough members.

11. A weeding device as claimed in any one of claims 3 to 10, in which the first and second paddles are aligned in a plane extending substantially parallel to the forward direction of the frame.

12. A weeding device as claimed in any one of claims 3 to 11, in which the platform comprises a forward platform section located adjacent the first paddles and extending underneath the second paddles, and a rearward platform section located to the rear of the second paddles.

13. A weeding device as claimed in claim 12, in which the forward platform section extends substantially parallel to the plane defined by the layer of vegetation and/or earth.

14. A weeding device as claimed in either of claims 12 or 13, in which the rearward platform section extends upwardly away from the plane defined by the forward platform section.

15. A weeding device as claimed in any one of claims 3 to 14, in which the drive mechanism comprises at least one drive chain operable to rotate the first and/or second axles.

## Patentansprüche

1. Eine Unkrautbekämpfungsvorrichtung (99) umfassend: Einen Rahmen (2), der mindestens ein Paar Radelemente für den Kontakt mit einer Vegetations- oder Erdschicht umfasst, wobei das Paar der Radelemente drehbar ist, um den Rahmen in mindestens eine Vorwärtsrichtung zu bewegen, wobei der Rahmen Folgendes hält: Eine Plattform, die ein vorderes Ende und ein gegenüberliegendes hinteres Ende umfasst, an der mindestens ein Hackenblatt (4) an der vorderen Seite davon bereitgestellt und im Einsatz so angeordnet ist, dass es in eine Vegetations- und/oder Erdschicht eingreift und auf die Plattform verschiebt; eine Achse (77), die von dem Rahmen über der Plattform gehalten wird, wobei die Achse eine Längsachse definiert, die sich in einem Winkel zu der Vorwärtsrichtung des Rahmens erstreckt,
und wobei die Achse um die Längsachse davon im Verhältnis zum Rahmen drehbar ist, wobei eine erste Achse eine Vielzahl von Schaufeln (47) umfasst, die sich radial davon nach außen erstrecken, das distale Ende jeder Schaufel ist so angeordnet, dass bei einer Drehung der ersten Achse das distale Ende jeder Schaufel so konfiguriert ist, dass es aufeinanderfolgend in die verschobene Vegetation und/oder Erde eingreift, sie aufnimmt und anhebt; und ein Antriebsmechanismus (71, 75) so konfiguriert ist, dass er im Einsatz die erste Achse im Verhältnis zum Rahmen dreht, wobei ein Abstand, der die erste Achse von der Plattform trennt, einstellbar ist; **dadurch gekennzeichnet, dass**:
Der Rahmen Folgendes umfasst:
Ein Gehäuse mit gegenüberliegenden Seitenteilen (72), die sich zwischen einem vorderen Ende und einem gegenüberliegenden hinteren Ende der Vorrichtung oder Plattform erstrecken, und in dem die Seitenteile ein Paar ausgerichteter Nuten bereitstellen, jede Nut ist so konfiguriert, dass sie gegenüberliegende Enden der Achse aufnimmt und sich in eine Richtung erstreckt, die sich im Wesentlichen senkrecht zu der Vegetations-/Erdschicht und/oder zu der durch die Plattform definierten Ebene erstreckt, und wobei das Gehäuse ferner einen Einstellmechanismus (5) umfasst, der mit einer oder jeder Nut in Verbindung steht, die so konfiguriert ist, dass die Position der Achse innerhalb der entsprechenden Nuten eingestellt werden kann, um zu ermöglichen, dass die Position der Schaufeln eingestellt wird, um den Bedingungen der Vegetation/Erde zu entsprechen.

2. Unkrautbekämpfungsvorrichtung nach Anspruch 1, wobei die Position des Hackenblatts im Verhältnis zum Rahmen und/oder der Plattform einstellbar ist, um die Vegetation und Erde aufzunehmen, bei denen die Vorrichtung eingesetzt wird.

3. Unkrautbekämpfungsvorrichtung (200) umfassend: Einen Rahmen (202), der mindestens ein Paar Radelemente (204) mit Kontakt zu einer Vegetations- oder Erdschicht umfasst, wobei das Paar der Radelemente drehbar ist, um den Rahmen in mindestens einer Vorwärtsrichtung zu bewegen, wobei der Rahmen Folgendes trägt: mindestens eine Reihe von Pflugelementen (206), wobei das distale freie Ende (208) jedes Pflugelements so konfiguriert ist, dass es im Einsatz in eine Vegetations- oder Erdschicht eingreifen kann, um verschobene Vegetation und/oder Erde zu erzeugen; eine erste Achse (210), die von dem Rahmen getragen wird, wobei die erste Achse eine Längsachse definiert, die sich in einem Winkel zu der Vorwärtsrichtung des Rahmens erstreckt, und wobei die erste Achse um ihre Längsachse im Verhältnis zum Rahmen drehbar ist, wobei die erste Achse eine Vielzahl von ersten Schaufeln (212) umfasst, die sich von ihr radial nach außen erstrecken, wobei das distale Ende jeder ersten Schaufel so angeordnet ist, dass bei Drehung der ersten Achse das distale Ende jeder Schaufel so konfiguriert ist, dass es aufeinanderfolgend in die verschobene Vegetation und/oder Erde, die von der mindestens einen Reihe von Pflugelementen erzeugt wird, eingreift und diese anhebt; eine Plattform (216), die nachgeschaltet von der mindestens einen Reihe von Pflugelementen und der ersten Achse angeordnet ist, wobei die Plattform von der Vegetations- oder Erdschicht beabstandet ist und diese nicht berührt, und wobei die Plattform im Einsatz so konfiguriert ist, dass sie die angehobene, verschobene Vegetation und/oder Erde von den ersten Schaufeln aufnimmt; eine zweite Achse (218), die von der ersten Achse gehalten wird und im Verhältnis zum Rahmen drehbar ist und so positioniert ist, dass sie neben und vertikal versetzt von der Plattform ist, wobei die zweite Achse eine Längsachse definiert, die sich in einem Winkel zu der Vorwärtsrichtung des Rahmens erstreckt, und wobei die zweite Achse um ihre Längsachse im Verhältnis zum Rahmen drehbar ist, wobei die zweite Achse eine Vielzahl von zweiten Schaufeln (220) umfasst, die sich von ihr radial nach außen erstrecken, wobei das distale Ende (222) jeder der zweiten Schaufeln so angeordnet ist, dass bei Drehung der zweiten Achse das distale Ende jeder zweiten Schaufel so konfiguriert ist, dass es aufeinanderfolgend in die angehobene, verschobene Vegetation und/oder Erde, die sich auf der Plattform befindet, eingreift, um das Unkraut davon zu trennen; und einen Antriebsmechanismus (224), der im Einsatz so konfiguriert ist, dass er die erste und die zweite Achse im Verhältnis zum Rahmen dreht; wobei die Position der ersten und/oder der zweiten Achse in einer vertikalen Richtung im Verhältnis zum Rahmen einstellbar ist; und **gekennzeichnet dadurch, dass**
der Rahmen ferner ein Gehäuse (226) mit gegenüberliegenden Seitenteilen (228) umfasst, die sich zwischen einem vorderen Ende und einem gegenüberliegenden hinteren Ende der Vorrichtung erstrecken, wobei die Seitenteile mindestens ein Paar ausgerichteter Nuten (234, 236) bereitstellen, die sich im Wesentlichen rechtwinklig zu der Vegetations-/Erdschicht und/oder der von der Plattform definierten Fläche erstreckt, jede Nut ist konfiguriert, die gegenüberliegenden Enden einer ersten oder zweiten Achse aufzunehmen, und wobei das Gehäuse ferner einen Einstellmechanismus in Verbindung mit jeder Nut umfasst, der konfiguriert ist, die Position der entsprechenden ersten und/oder zweiten Achse so unabhängig innerhalb der entsprechenden Nuten einstellen zu können, um die Position der ersten und/oder zweiten Schaufeln unabhängig einstellen zu können, damit sie den Bedingungen der Vegetation/Erde entsprechen.

4. Unkrautbekämpfungsvorrichtung nach Anspruch 3, wobei jedes Pflugelement eine im Wesentlichen ebene Platte umfasst, um in die Vegetations-/Erdschicht einzugreifen, und wobei jedes Pflugelement eine oder mehrere Nuten, Kanäle oder Verteiler bereitstellt, die sich zwischen einem vorderen und hinteren Ende davon erstrecken, um Führungskanäle für verdrängte Vegetation und Erde aus der Vegetations-/Erdschicht bereitzustellen.

5. Unkrautbekämpfungsvorrichtung nach einem der Ansprüche 3 oder 4, wobei die Position der Pflugelemente im Verhältnis zum Rahmen eingestellt werden kann.

6. Unkrautbekämpfungsvorrichtung nach einem der Ansprüche 3 bis 5, wobei die erste Achse eine Längsachse definiert, die sich im Wesentlichen rechtwinklig zu der Vorwärtsrichtung des Rahmens erstreckt.

7. Unkrautbekämpfungsvorrichtung nach einem der Ansprüche 5 bis 6, wobei die ersten Schaufeln an der Rückseite der mindestens einen Reihe von Pflugelementen positioniert sind.

8. Unkrautbekämpfungsvorrichtung nach einem der Ansprüche 3 bis 7, wobei die Vielzahl der ersten Schaufeln in einer Anordnung bereitgestellt werden, die eine Vielzahl von Sätzen erster Schaufeln umfasst, die entlang der ersten Achse voneinander beabstandet sind.

9. Unkrautbekämpfungsvorrichtung nach einem der Ansprüche 3 bis 8, wobei die zweiten Schaufeln über und vertikal von der Plattform beabstandet sind.

10. Unkrautbekämpfungsvorrichtung nach einem der Ansprüche 3 bis 9, wobei die zweiten Schaufeln an der Rückseite der ersten Achse und der mindestens einen Reihe von Pflugelementen positioniert sind.

11. Unkrautbekämpfungsvorrichtung nach einem der Ansprüche 3 bis 10, wobei die ersten und zweiten Schaufeln in einer Ebene ausgerichtet sind, die sich im Wesentlichen parallel zu der Vorwärtsrichtung des Rahmens erstreckt.

12. Unkrautbekämpfungsvorrichtung nach einem der Ansprüche 3 bis 11, wobei die Plattform einen nach vorne gerichteten Plattform-Abschnitt an den ersten Schaufeln umfasst, der sich unter den zweiten Schaufeln erstreckt und einen nach hinten gerichteten Plattform-Abschnitt umfasst, der hinter den zweiten Schaufeln positioniert ist.

13. Unkrautbekämpfungsvorrichtung nach Anspruch 12, wobei sich der nach vorne gerichtete Plattform-Abschnitt im Wesentlichen parallel zu der Ebene erstreckt, die durch die Vegetations- und/oder Erdschicht definiert wird.

14. Unkrautbekämpfungsvorrichtung nach einem der Ansprüche 12 oder 13, wobei sich der nach hinten gerichtete Plattform-Abschnitt nach oben und weg von der Ebene erstreckt, die durch den vorwärts gerichteten Plattform-Abschnitt definiert wird.

15. Unkrautbekämpfungsvorrichtung nach einem der Ansprüche 3 bis 14, wobei der Antriebsmechanismus mindestens eine Antriebskette umfasst, die betriebsbereit ist, die erste und/oder zweite Achse zu drehen.

## Revendications

1. Dispositif de désherbage (99) comprenant : un châssis (2) comprenant au moins une paire d'éléments de roue destinés à entrer en contact avec une couche de végétation ou de terre, dans lequel la paire d'éléments de roue peuvent tourner pour bouger le châssis dans au moins une direction vers l'avant, dans lequel le châssis supporte : une plateforme comprenant une extrémité avant et une extrémité arrière opposée, dans lequel au moins une lame de houe (4) est prévue à l'extrémité avant de celle-ci et est agencée, lors de l'utilisation, pour venir en prise avec une couche de végétation et/ou de terre et la déplacer sur la plateforme ; un essieu (77) supporté par le châssis au-dessus de la plateforme, dans lequel l'essieu définit un axe longitudinal s'étendant à un angle par rapport à la direction avant du châssis,
et dans lequel l'essieu peut tourner autour de l'axe longitudinal de celui-ci par rapport au châssis, dans lequel un premier essieu comprend une pluralité de palettes (47) s'étendant radialement vers l'extérieur à partir de celui-ci, l'extrémité distale de chaque palette est agencée de sorte que, sous l'effet de la rotation du premier essieu, l'extrémité distale de chaque palette est conçue pour venir en prise de manière séquentielle avec la végétation déplacée et/ou la terre reçue sur la plateforme, la ramasser et la soulever ; et un mécanisme d'entraînement (71, 75) est conçu lors de l'utilisation pour faire tourner le premier essieu par rapport au châssis, dans lequel un espacement séparant le premier essieu et la plateforme est réglable ; **caractérisé en ce que** :
le châssis comprend :
un boîtier présentant des parties latérales opposées (72) s'étendant entre une extrémité avant et une extrémité arrière opposée du dispositif ou de la plateforme et dans lequel les parties latérales comportent une paire de fentes alignées, chaque fente étant conçue pour recevoir les extrémités opposées de l'essieu et s'étendant dans une direction s'étendant sensiblement perpendiculaire à la couche de végétation/terre et/ou au plan défini par la plateforme et dans lequel le boîtier comprend en outre un mécanisme de réglage (5) en communication avec une ou chaque fente conçue afin de permettre le réglage de l'emplacement de l'essieu à l'intérieur des fentes correspondantes afin de permettre le réglage de l'emplacement des palettes pour correspondre aux conditions de la végétation/terre.

2. Dispositif de désherbage selon la revendication 1, dans lequel la position de la lame de houe est réglable par rapport au châssis et/ou à la plateforme pour s'adapter à la végétation et à la terre sur lesquelles le dispositif est utilisé.

3. Dispositif de désherbage (200) comprenant : un châssis (202) comprenant au moins une paire d'éléments de roue (204) destinés à entrer en contact avec une couche de végétation ou de terre, dans lequel la paire d'éléments de roue peut tourner pour bouger le châssis dans au moins une direction vers l'avant, dans lequel le châssis supporte : au moins une rangée d'éléments de charrue (206), dans lequel l'extrémité libre distale (208) de chaque élément de charrue est conçue lors de l'utilisation pour pouvoir venir en prise avec une couche de végétation ou de terre pour produire de la végétation et/ou de la terre déplacées ; un premier essieu (210) supporté par le châssis, dans lequel le premier essieu définit un axe longitudinal s'étendant à un angle par rapport à la direction avant du châssis, et dans lequel le premier essieu peut tourner autour de l'axe longitudinal de celui-ci par rapport au châssis, dans lequel le premier essieu comprend une pluralité de premières palettes (212) s'étendant radialement vers l'extérieur à partir de celui-ci, dans lequel l'extrémité distale de chaque première palette est agencée de sorte que, sous l'effet de la rotation du premier essieu, l'extrémité distale de chaque palette est conçue pour venir en prise de manière séquentielle avec la végétation déplacée et/ou la terre produite par au moins une rangée d'éléments de charrue ; une plateforme (216) située en aval de ladite au moins une rangée d'éléments de charrue et du premier essieu, dans lequel la plateforme est espacée et exempte de contact avec la couche de végétation ou de terre, et dans lequel la plateforme est conçue lors de l'utilisation pour recevoir la végétation et/ou la terre soulevées et déplacées des premières palettes ; un second essieu (218) supporté par le châssis et pouvant tourner par rapport au châssis et positionné adjacent à la plateforme et déplacé verticalement par rapport à celle-ci, dans lequel le second essieu définit un axe longitudinal s'étendant à un angle par rapport à la direction avant du châssis, et le second essieu pouvant tourner autour de l'axe longitudinal de celui-ci par rapport au châssis de celui-ci, dans lequel le second essieu comprend une pluralité de secondes palettes (220) s'étendant radialement vers l'extérieur à partir de celui-ci, dans lequel l'extrémité distale (222) de chaque seconde palette est agencée de sorte que, sous l'effet de la rotation du second essieu, l'extrémité distale de chaque seconde palette est conçue pour venir en prise de manière séquentielle avec la végétation et/ou la terre soulevées et déplacées situées sur la plateforme pour en séparer les mauvaises herbes ; et un mécanisme d'entraînement (224) conçu lors de l'utilisation pour faire tourner les premier et second essieux par rapport au châssis ; l'emplacement du premier et/ou du second essieu est réglable dans une direction verticale par rapport au châssis ; et **caractérisé en ce que**
le châssis comprend en outre un boîtier (226) présentant des parties latérales opposées (228) s'étendant entre une extrémité avant et une extrémité arrière opposée du dispositif, dans lequel les parties latérales fournissent au moins une paire de fentes alignées (234, 236) s'étendant sensiblement perpendiculairement à la couche de végétation/terre et/ou au plan défini par la plateforme, chaque fente étant conçue pour recevoir les extrémités opposées d'un premier ou d'un second essieu, et dans lequel le boîtier comprend en outre un mécanisme de réglage en communication avec chaque fente conçu afin de permettre le réglage de manière indépendante de l'emplacement du premier et/ou du second essieu correspondant dans les fentes correspondantes afin de permettre le réglage indépendant de l'emplacement des première et/ou seconde palettes pour correspondre aux conditions de la végétation/terre.

4. Dispositif de désherbage selon la revendication 3, dans lequel chaque élément de charrue comprend une plaque sensiblement plane destinée à venir en prise avec la couche de végétation/terre et dans lequel chaque élément de charrue présente une ou plusieurs rainures, canaux ou glissières s'étendant entre une extrémité avant et arrière de celui-ci pour fournir des canaux de guidage destinés à la végétation et la terre délogées de la couche de végétation ou de terre.

5. Dispositif de désherbage selon l'une quelconque des revendications 3 ou 4, dans lequel l'emplacement des éléments de charrue peut être réglé par rapport au châssis.

6. Dispositif de désherbage selon l'une quelconque des revendications 3 à 5, dans lequel le premier essieu définit un axe longitudinal s'étendant sensiblement perpendiculairement à la direction avant du châssis.

7. Dispositif de désherbage selon l'une quelconque des revendications 5 à 6, dans lequel les premières palettes sont situées à l'arrière de ladite au moins une rangée d'éléments de charrue.

8. Dispositif de désherbage selon l'une quelconque des revendications 3 à 7, dans lequel la pluralité de premières palettes sont ménagées dans un agencement comprenant une pluralité d'ensembles de premières palettes espacées les unes des autres le long du premier essieu.

9. Dispositif de désherbage selon l'une quelconque des revendications 3 à 8, dans lequel les secondes palettes sont situées au-dessus de la plateforme et déplacées verticalement par rapport à la plateforme.

10. Dispositif de désherbage selon l'une quelconque des revendications 3 à 9, dans lequel les secondes palettes sont situées à l'arrière du premier essieu et de ladite au moins une rangée d'éléments de charrue.

11. Dispositif de désherbage selon l'une quelconque des revendications 3 à 10, dans lequel les première et seconde palettes sont alignées dans un plan s'étendant sensiblement parallèle à la direction avant du châssis.

12. Dispositif de désherbage selon l'une quelconque des revendications 3 à 11, dans lequel la plateforme comprend une section de plateforme avant située adjacente aux premières palettes et s'étendant sous les secondes palettes, et une section de plateforme arrière située à l'arrière des secondes palettes.

13. Dispositif de désherbage selon la revendication 12, dans lequel la section de plateforme avant s'étend sensiblement parallèle au plan défini par la couche de végétation et/ou de terre.

14. Dispositif de désherbage selon l'une ou l'autre des revendications 12 ou 13, dans lequel la section de plateforme arrière s'étend vers le haut en s'éloignant du plan défini par la section de plateforme avant.

15. Dispositif de désherbage selon l'une quelconque des revendications 3 à 14, dans lequel le mécanisme d'entraînement comprend au moins une chaîne d'entraînement pouvant être actionnée pour faire tourner le premier et/ou le second essieu.
